# EUROPEAN PATENT APPLICATION

(11) **EP 4 764 851 A1**
(43) Date of publication of application: **24.06.2026**
(21) Application number: 23949167.3
(22) Date of filing: 15.08.2023
(51) Int. Cl.: G06F 9/48

(54) **JOB MANAGEMENT PROGRAM, JOB MANAGEMENT METHOD, AND JOB MANAGEMENT DEVICE**

(71) Applicant: FUJITSU LIMITED, Kawasaki-shi, Kanagawa 211-8588 (JP)
(72) Inventor: SONEDA, Hiromitsu, Kawasaki-shi, Kanagawa 211-8588 (JP); KOBAYASHI, Hiroyuki, Kawasaki-shi, Kanagawa 211-8588 (JP); HASHIMA, Masayoshi, Kawasaki-shi, Kanagawa 211-8588 (JP)
(74) Representative: Haseltine Lake Kempner LLP
(86) International application number: PCT/JP2023/029548
(87) International publication number: WO 2025/037397

(57) **Abstract**

A system (110) has multiple nodes (111). An information processing device (100) stores record information (130) for each of multiple jobs (120) input to the system (110). Based on the record information (130), the information processing device (100) identifies among the multiple jobs (120), one or more jobs (120) for which an execution waiting period exceeds a predetermined length. The information processing device (100) generates, for each job (120) of the identified one or more jobs (120), output information (140) that visualizes the number of nodes (111) that execute the job (120) and an execution waiting period of the job (120). The output information (140) indicates, for example, a display screen (141) in the form of a Gantt chart including M display regions (150) arranged in parallel along a time axis.

## Description

### TECHNICAL FIELD

The present invention relates to an information processing program, an information processing method, and an information processing device.

### BACKGROUND ART

Conventionally, there is a system that includes multiple nodes and executes an input job using one or more of the nodes. For example, the system executes the job using a specified number of nodes when the job is submitted. When the number of jobs input to the system increases, the jobs may wait for execution.

In a related art, for example, it is determined whether a minimum number of processors requested by a job waiting to be executed are in an available state. Further, for example, there is a technique in which the number of processors that can be simultaneously used by jobs of each job class is stored in advance. Further, for example, there is a technique of executing a processing delay check job for each processing delay check pattern. Further, for example, there is a technique of dispatching a job from a queue. In addition, for example, there is a technique of graphically displaying a status of a process.
Patent Document 1: Japanese Laid-Open Patent Publication No. H7-141305
Patent Document 2: Japanese Laid-Open Patent Publication No. H7-200496
Patent Document 3: Japanese Laid-Open Patent Publication No. 2012-146049
Patent Document 4: U.S. Patent Application Publication No. 2011/0072437
Patent Document 5: U.S. Patent No. 06289368

### DISCLOSURE OF INVENTION

### PROBLEM TO BE SOLVED BY THE INVENTION

However, in the related arts, there is a problem in that it is difficult to grasp a factor that a job is waiting to be executed. For example, it is conceivable to display, for each node, a Gantt chart in which a period during which a job is being executed using the node and an identifier for identifying the job are associated with each other. However, it is difficult to grasp a factor that the job is waiting to be executed.

According to one aspect, one object of the present invention relates to facilitating understanding of a factor that a job is waiting to be executed.

### MEANS FOR SOLVING PROBLEM

According to one embodiment, an information processing program, an information processing method, and an information processing device are proposed that identify, among a plurality of jobs submitted to a system having a plurality of nodes, one or more jobs for which a waiting period during which the one or more jobs awaits execution exceeds a predetermined length, the one or more jobs being identified based on record information that for each of the plurality of jobs, indicates a number of nodes that execute the each of the plurality of jobs, a time point at which the each of the plurality of jobs is submitted, and a time point at which execution of the each of the plurality of jobs is started; and generate output information that visualizes, for each of the identified one or more jobs, the number of nodes that execute the each of the identified one or more jobs and the waiting period during which the each of the identified one or more jobs awaits execution.

### EFFECT OF THE INVENTION

According to one aspect, it becomes possible to easily grasp a factor that a job is waiting to be executed.

### BRIEF DESCRIPTION OF DRAWINGS

Fig. 1 is an explanatory diagram depicting an example of an information processing method according to an embodiment.
Fig. 2 is an explanatory diagram depicting an example of a job managing system 200.
Fig. 3 is a block diagram of an example of a hardware configuration of an information processing device 100.
Fig. 4 is an explanatory diagram depicting a flow of operation of the job managing system 200.
Fig. 5 is an explanatory diagram depicting an example of storage contents of a log information management table.
Fig. 6 is a block diagram depicting an example of a functional configuration of the information processing device 100.
Fig. 7 is an explanatory diagram depicting an operation example of the information processing device 100.
Fig. 8 is an explanatory diagram depicting an operation example of the information processing device 100.
Fig. 9 is an explanatory diagram depicting an operation example of the information processing device 100.
Fig. 10 is an explanatory diagram depicting an operation example of the information processing device 100.
Fig. 11 is a flowchart depicting an example of a procedure of a calculating process.
Fig. 12 is a flowchart depicting an example of a procedure of a determining process.
Fig. 13 is a flowchart depicting an example of a procedure of an overall process.

### BEST MODE(S) FOR CARRYING OUT THE INVENTION

Embodiments of an information processing program, an information processing method, and an information processing device according to the present invention will be explained below in detail with reference to the accompanying drawings.

### (Example of Information Processing Method According to Embodiment)

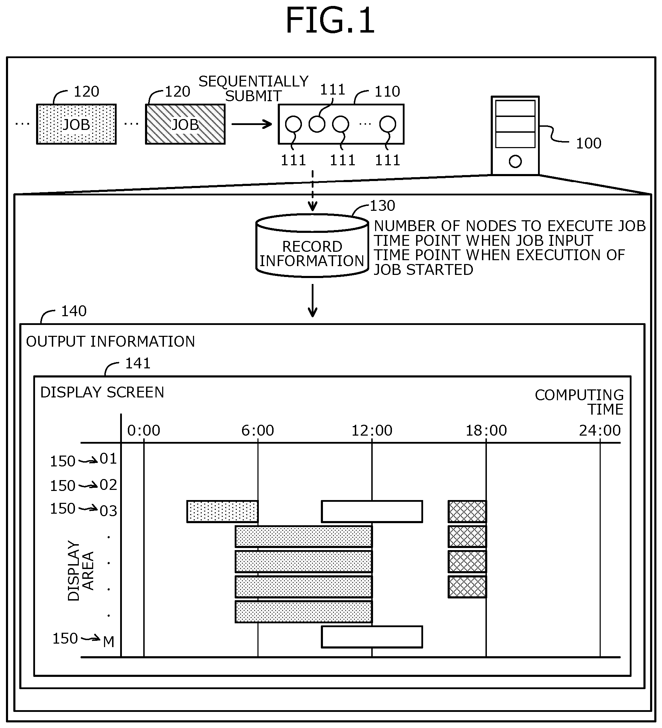

Fig. 1 is an explanatory diagram depicting an example of an information processing method according to an embodiment. An information processing device 100 is a computer for facilitating understanding of a factor that a job is waiting to be executed in a system of interest. The information processing device 100 is, for example, a server or a personal computer (PC).

The system of interest is a system including multiple nodes. The system of interest executes a submitted job using one or more of the nodes. For example, the system of interest executes a job by using a specified number of nodes when the job is input. The system of interest is specifically a cluster system.

The system of interest is specifically a system for performing large-scale computation such as high-performance computing (HPC). In particular, the system of interest may be a system forming a quantum circuit simulator. The system of interest is used by multiple users, for example. For example, a user causes the system of interest to execute a job and refers to a result of executing the job.

Conventionally, a job scheduler manages jobs executed in the system of interest. The user designates the number of nodes to be used when executing a job and transmits an execution request requesting execution of the job to the job scheduler via a terminal device. For example, the job scheduler allocates a specified number of nodes in response to the execution request and controls the system of interest to execute the job.

Here, when the number of jobs input to the system of interest increases, the jobs may wait for execution. As the execution waiting period of the job becomes longer, the degree of satisfaction or reliability of the system of interest by the user who has input the job tends to decrease. For this reason, it is desirable that the user, an administrator, or the like grasp a factor that a job is waiting to be executed in a system of interest.

However, in the related art, there is a problem in that it is difficult for a user, an administrator, or the like to grasp a factor that a job is waiting to be executed in a system of interest.

For example, a method of outputting, for each user, statistical information related to a job corresponding to the user is conceivable. The statistical information is, for example, a statistical value such as the number of nodes used by the job corresponding to the user, the length of a period during which the job corresponding to the user is being executed, the number of jobs corresponding to the user, or the length of a period during which the job corresponding to the user is waiting to be executed.

In this method, it is difficult to easily grasp a factor that a job is waiting to be executed in the system of interest. For example, the statistical information described above does not represent the relationship between the execution status of the job waiting for execution and the execution status of another job, the bias of the timing at which the job waiting for execution uses the node, and the like. For this reason, the user, the administrator, or the like cannot grasp the cause of the wait for the execution of a job in the system of interest even by referring to the above-described statistical information.

In addition, for example, a method of displaying a Gantt chart representing a period during which a job is being executed using a node is considered. The Gantt chart includes, for example, multiple band-shaped display regions corresponding to different nodes arranged in parallel along a time axis. For example, a method of displaying a Gantt chart in which a frame representing a period during which a job is being executed using each node is arranged on a display region corresponding to each node is considered.

In this method, it is difficult to easily grasp a factor that a job is waiting to be executed in a system of interest. For example, the above-described Gantt chart represents a period during which a job is being executed, but does not represent a period during which a job is waiting to be executed, and does not represent a relationship between execution statuses of a job waiting to be executed and other jobs, a bias in timing at which a job waiting to be executed uses a node, or the like. For this reason, the user, the administrator, or the like cannot grasp the cause of the wait for the execution of a job in the system of interest even by referring to the above-described Gantt chart.

Therefore, in the present embodiment, an information processing method capable of easily grasping a factor that a job is waiting to be executed in a system of interest will be described.

In Fig. 1, there is a system 110 having multiple nodes 111. In response to an input of a job 120, the system 110 executes the job 120 by using a specified number of nodes 111. For example, it is assumed that multiple jobs 120 have been input to the system 110 and executed in the past.

The information processing device 100 stores record information 130 for each of the jobs 120 input to the system 110. The record information 130 represents, for example, for each job 120, the number of nodes 111 that execute the job 120, a time point at which the job 120 is submitted, and a time point at which execution of the job 120 is started.

(1-1) The information processing device 100 identifies one or more jobs 120 in which an execution waiting period exceeding a predetermined length has occurred among the jobs 120, based on the record information 130. The predetermined length is set in advance as a threshold value, for example. The threshold may be, for example, 0.

(1-2) The information processing device 100 generates output information 140 that for each job 120 of the specified one or more jobs 120, visualizes the number of nodes 111 that execute the job 120 and the execution waiting period of the job 120. The output information 140 indicates, for example, a display screen 141 in a Gantt chart format including M band-shaped display regions 150 arranged in parallel along the time axis. M is, for example, the maximum value of the number of jobs waiting to be executed concurrent.

The information processing device 100 prepares, for example, an empty display screen 141. For example, among the M display areas 150, the information processing device 100 selects the same number of display areas 150 as the number of nodes 111 that execute each job 120 of the specified one or more jobs 120. The information processing device 100 updates the display screen 141 such that a frame representing a period during which the job 120 is waiting to be executed is arranged in each of the selected display areas 150 for each of the identified one or more jobs 120. The frame may indicate, for example, the job 120 that is waiting to be executed, in an identifiable manner. The frame may indicate, for example, the user who has input the job 120 waiting to be executed, in an identifiable manner.

For example, the information processing device 100 generates the output information 140 indicating the updated display screen 141. As a result, the information processing device 100 can generate the output information 140 serving as a guideline for analyzing a factor that the job 120 is waiting to be executed in the system 110. For example, the information processing device 100 can generate the output information 140 that makes it easy for a user, an administrator, or the like to grasp the relationship between the execution statuses of the jobs 120 waiting to be executed, the bias of the timings at which the jobs waiting to be executed use the nodes, or the like.

(1-3) The information processing device 100 outputs the generated output information 140. For example, the information processing device 100 displays a display screen 141 in a Gantt chart format based on the generated output information 140. For example, the information processing device 100 may transmit the generated output information 140 to another computer. Thus, the information processing device 100 enables the user, the administrator, or the like to easily grasp the factor that the job 120 is waiting to be executed in the system 110. The information processing device 100 enables, for example, a user, an administrator, or the like to easily grasp the relationship between the execution statuses of the jobs 120 waiting to be executed, the bias of the timings at which the jobs waiting to be executed use the nodes, or the like.

The information processing device 100 enables, for example, a user, an administrator, or the like to easily grasp a user who tends to wait for execution of the job 120. In the information processing device 100, for example, a user, an administrator, or the like can easily determine a measure for reducing the frequency of occurrence of execution waiting, a measure for reducing the length of an execution waiting period, or the like. Therefore, the information processing device 100 can improve the user's satisfaction or reliability with respect to the system 110. The information processing device 100 can distribute the load on the system 110.

Here, while a case in which the display screen 141 includes only the M band-shaped display areas 150 has been described, the present invention is not limited hereto. For example, the display screen 141 may include N band-shaped display areas (not depicted) and M band-shaped display areas 150 arranged in parallel along the time axis. N is, for example, the number of nodes 111. For example, it is conceivable that in the N display regions, frames indicating periods during which the jobs 120 are being executed are arranged on the same number of display regions as the number of nodes 111 that execute the respective jobs 120 of the multiple jobs 120. Further, for example, it is conceivable that N display areas are associated with different nodes 111, and a frame representing a period during which a job 120 is being executed is arranged on a display area corresponding to a node 111 that executes the job 120 among the multiple jobs 120.

Here, while a case in which the information processing device 100 is a single computer has been described, the present invention is not limited hereto. For example, functions of the information processing device 100 may be implemented by multiple computers. Specifically, functions of the information processing device 100 may be implemented on a cloud.

### (Example of Job Managing System 200)

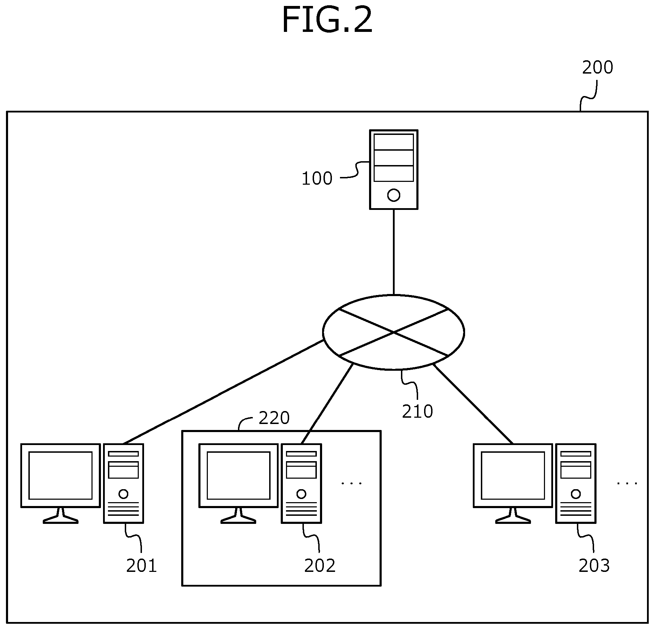

Next, an example of a job managing system 200 to which the information processing device 100 depicted in Fig. 1 is applied will be described with reference to Fig. 2.

Fig. 2 is an explanatory diagram depicting an example of the job managing system 200. In Fig. 2, the job managing system 200 includes the information processing device 100, a managing device 201, multiple computing nodes 202, and a client device 203. The managing device 201 and the multiple computing nodes 202 form, for example, a job executing system 220.

In the job managing system 200, the information processing device 100 and the managing device 201 are connected via a wired or wireless network 210. The network 210 is, for example, a local area network (LAN), a wide area network (WAN), the Internet, or the like. The managing device 201 and the computing nodes 202 are connected via the wired or wireless network 210. The managing device 201 and the client device 203 are connected via the wired or wireless network 210.

### (Example of Hardware Configuration of Information Processing Device 100)

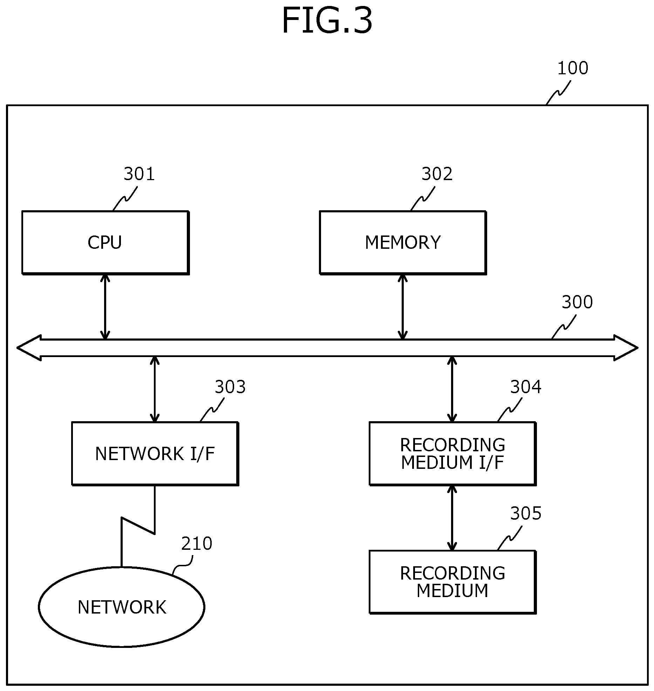

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random-access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

An example of a hardware configuration example of the managing device 201 is, for example, similar to the example of the hardware configuration of the information processing device 100 depicted in Fig. 3 and thus, description thereof is omitted.

An example of a hardware configuration example of the computing node 201 is, for example, similar to the example of the hardware configuration of the information processing device 100 depicted in Fig. 3 and thus, description thereof is omitted.

An example of a hardware configuration example of the client device 203 is, for example, similar to the example of the hardware configuration of the information processing device 100 depicted in Fig. 3 and thus, description thereof is omitted.

### (Flow of Operation of Job Managing System 200)

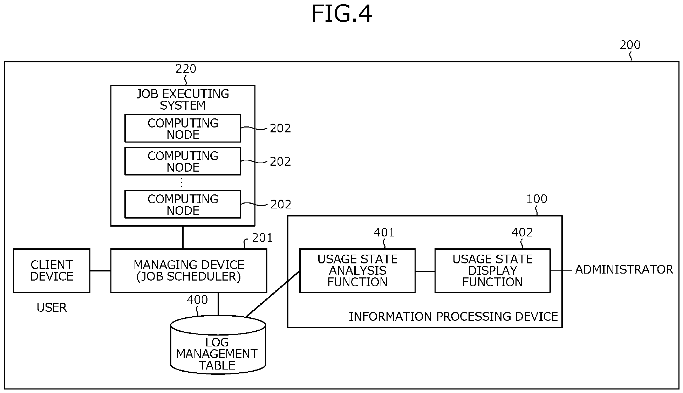

Next, a flow of operation of the job managing system 200 will be described with reference to Fig. 4.

Fig. 4 is an explanatory diagram depicting a flow of operation of the job managing system 200. In Fig. 4, the client device 203 is a computer for inputting a job to the job executing system 220. The client device 203 is used by, for example, a user of the job executing system 220. The client device 203 submits a job to the job executing system 220 by transmitting an execution request requesting execution of the job to the managing device 201, based on an operation input by the user. The client device 203 receives the result of executing the job from the managing device 201. The client device 203 outputs the result of executing the job so that the user can refer to the result. The client device 203 is, for example, a PC, a tablet terminal, or a smartphone.

The managing device 201 is a computer that manages the job executing system 220. The managing device 201 is used by, for example, an administrator who manages the job executing system 220. The managing device 201 realizes, for example, a job scheduler. The managing device 201 receives an execution request executing a job from the client device 203. The execution request includes specification of the number of computing nodes 202 that execute the job.

In response to the execution request, the management device 201 allocates the specified number of computing nodes 202 that are in an available state. The available state is a state in which no job is being executed. The managing device 201 controls the allocated specified number of computing nodes 202 to execute all or part of the job. For example, the management device 201 transmits an execution request requesting execution of all or a part of the job to the specified number of computing nodes 202. As a result, when the specified number is two or more, the managing device 201 can control the two or more computing nodes 202 so that the two or more computing nodes 202 share and execute the job.

When the managing device 201 receives the execution request and the specified number of computing nodes 202 in the available state cannot be allocated, the managing device 201 manages the job as a job waiting for execution until the specified number of computing nodes 202 in the available state can be allocated. When the managing device 201 receives the execution request and the specified number of computing nodes 202 in the available state cannot be allocated, the managing device 201 manages the job as a job waiting for execution until the specified number of computing nodes 202 in the available state can be allocated. For example, the managing device 201 manages jobs waiting to be executed in a first-in-first-out (FIFO) queue.

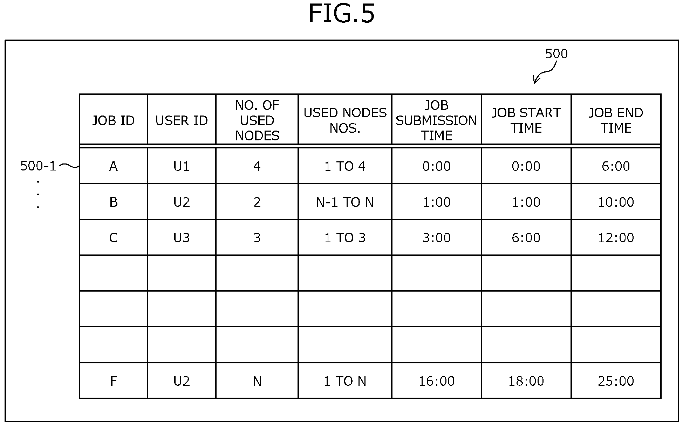

When a job is input to the job executing system 220, the managing device 201 generates record information for the job and stores the record information using a log information management table described later with reference to Fig. 5. The record information represents, for example, for a job, the number of computing nodes 202 that execute the job, a time point at which the job is input, and a time point at which execution of the job is started. The record information may further indicate, for example, a time point at which execution of a job is completed.

For example, in response to a job being submitting to the job executing system 220, the management device 201 generates record information including the number of computing nodes 202 that execute the job and a time point at which the job is submitted, and stores the record information using the log information management table. For example, in response to the start of execution of the job in the job executing system 220, the managing device 201 updates the record information so as to further include the time point at which the execution of the job is started. For example, in response to completion of execution of the job in the job executing system 220, the managing device 201 updates the record information so as to further include a time point at which execution of the job is completed.

The managing device 201 receives, from the information processing device 100, an inquiry about record information for each of the jobs input to the job executing system 220. In response to receiving the inquiry, the managing device 201 transmits to the information processing device 100, record information for each of the jobs submitted to the job executing system 220. The managing device 201 transmits, for example, storage contents of a log information management table to be described later with reference to Fig. 5 to the information processing device 100.

The managing device 201 receives a result of executing all or part of the job from the computing node 202. Upon receiving the result of executing the entire job, the managing device 201 transmits the result of executing the entire job to the client device 203. Upon receiving the result of executing a part of the job, the managing device 201 generates a result of executing the entire job and transmits the result to the client device 203. The management device 201 is, for example, a server or a PC.

Each of the computing nodes 202 is a computer that forms the job executing system 220. The computing node 202 executes all or part of the job submitted to the job executing system 220 under the control of the managing device 201. The computing node 202 transmits a result of executing all or a part of the job to the managing device 201. The computing node 202 is, for example, a server or a PC.

The information processing device 100 is a computer for making it easy to grasp a factor that a job is waiting to be executed. The information processing device 100 is used by, for example, an administrator who manages the job executing system 220. The information processing device 100 includes, for example, a usage state analysis function 401 and a usage state display function 402.

The information processing device 100 transmits an inquiry about record information of each of the jobs input to the job executing system 220, to the managing device 201 by the usage state analysis function 401. The information processing device 100 receives from the managing device 201, the record information of each of the jobs input to the job executing system 220 by the usage state analysis function 401. The information processing device 100 receives, for example, storage contents of a log information management table to be described later with reference to Fig. 5, from the managing device 201 by the usage state analysis function 401. The information processing device 100 specifies one or more jobs in which an execution waiting period exceeding a predetermined length has occurred among the jobs, based on the recorded information by the usage state analysis function 401. The predetermined length is set in advance as a threshold value, for example. The threshold may be, for example, 0.

The information processing device 100 may specify a job having the longest execution period, a job having the longest execution waiting period, a job having the largest number of nodes to be executed, or the like based on the recorded information by the usage state analysis function 401. The information processing device 100 may specify a user having the largest statistical value for the length of the period during which the job is being executed, based on the recorded information by the usage state analysis function 401. The information processing device 100 may specify a user having the largest statistical value for the length of the execution waiting period of the job, based on the recorded information by the usage state analysis function 401. The information processing device 100 may specify a user having the largest statistical value for the number of nodes, based on the record information by the usage state analysis function 401. The statistical value is, for example, an average value, a maximum value, a minimum value, a mode value, or a median value.

With the usage state display function 402, the information processing device 100 generates, for each of the identified one or more jobs, output information that visualizes the number of computing nodes 202 that execute the job and the execution waiting period of the job. The output information indicates, for example, a display screen in a Gantt chart format. The display screen includes, for example, N band-shaped display areas and M band-shaped display areas arranged in parallel along the time axis. N is, for example, the number of computing nodes 202. M is, for example, the maximum value of the number of jobs waiting to be executed at the same time.

In the display screen, for example, in the N display regions, frames indicating periods during which the jobs are being executed are arranged on the same number of display regions as the number of computing nodes 202 that execute the jobs of the jobs. The frame representing the period during which the job is being executed may indicate the job in an identifiable manner, for example. The frame representing the period during which the job is being executed may indicate, for example, a user who has input the job in an identifiable manner.

The N display regions may be associated with different computing nodes 202. In the display screen, for example, in the N display areas, a frame representing a period during which a job is being executed may be arranged on a display area corresponding to the computing node 202 that executes each job of the jobs.

In the display screen, for example, in the M display regions, frames indicating execution waiting periods of the jobs are arranged in the same number of display regions as the computing nodes 202 that execute the jobs of the specified one or more jobs. The frame representing the period during which the job is waiting for execution may indicate the job in an identifiable manner, for example. The frame representing the period during which the job is waiting for execution may indicate, for example, a user who has input the job in an identifiable manner.

On the display screen, for example, when a job is being executed and another job input by the same user is waiting to be executed, a frame representing a period during which the other job is waiting to be executed may be displayed in a specific display mode. In the display screen, for example, in a case where there are two jobs that are input by the same user and are waiting to be executed at the same time, a frame representing a period during which at least one of the two jobs is waiting to be executed may be displayed in a specific display mode.

The information processing device 100 displays a display screen in a Gantt chart format based on the information output by the usage state display function 402 so that the administrator can refer to the display screen. As a result, the information processing device 100 enables the administrator to easily grasp the factor that the job is waiting to be executed in the job executing system 220. The information processing device 100 may display, by the usage state display function 402, information indicating a job having the longest execution period, a job having the longest execution waiting period, or a job having the largest number of nodes to be executed, so that the administrator can refer to the information. As a result, the information processing device 100 enables the administrator to easily grasp the factor that the job is waiting to be executed in the job executing system 220.

The information processing device 100 may display by the usage state display function 402, the information indicating the user having the largest statistical value for the length of the period during which the job is being executed, so that the administrator can refer to the information. The information processing device 100 may display by the usage state display function 402, information indicating the user having the largest statistical value for the length of the execution waiting period of the job or the user having the largest statistical value for the number of nodes, so that the administrator can refer to the information. As a result, the information processing device 100 enables the administrator to easily grasp the factor that a job is waiting to be executed in the job executing system 220. The information processing device 100 is, for example, a server or a PC.

Here, while a case in which the information processing device 100 is a device different from the managing device 201 has been described, the present invention is not limited hereto. For example, the information processing device 100 may have a function of the managing device 201 and may also operate as the managing device 201.

Here, while a case in which the information processing device 100 is a device different from the computing nodes 202 has been described, the present invention is not limited hereto. For example, the information processing device 100 may have a function of the computing nodes 202 and may also operate as the computing nodes 202.

Here, while a case in which the information processing device 100 is a device different from the client device 203 has been described, the present invention is not limited hereto. For example, the information processing device 100 may have a function as the client device 203 and may also operate as the client device 203.

Here, while a case in which the management device 201 is a device different from the computing nodes 202 has been described, the present invention is not limited hereto. For example, the management device 201 may have a function of the computing nodes 202 and may also operate as the computing node 202.

### (Storage Content of Log Information Management Table)

Next, an example of storage contents of the log information management table will be described with reference to Fig. 5. The log information management table is implemented by, for example, a storage area such as the memory 302 or the recording medium 305 of the information processing device 100 depicted in Fig. 3.

Fig. 5 is an explanatory diagram depicting an example of storage contents of the log information management table. As depicted in Fig. 5, the log information management table includes fields for job ID, user ID, number of used nodes, used node Nos., job submission time, job start time, and job end time. In the log information management table, record information is stored as a record 500-a by setting information in each field for each job. "a" is an integer.

In the job ID field, a job ID for identifying a job is set. In the user ID field, a user ID for identifying the user who has input the job to the job executing system 220 is set. In the field of the number of used nodes, the number of used nodes indicating the number of computing nodes 202 that execute the job is set. In the used node Nos. field, node identification numbers for identifying the computing nodes 202 that executes the job are set.

In the field of the job submission time, a job submission time indicating the time at which the job is input to the job executing system 220 is set. In the field of the job start time, a job start time indicating the time at which execution of the job is started in the job executing system 220 is set. In the field of the job end time, a job end time indicating the time at which execution of the job is ended in the job executing system 220 is set.

### (Functional Configuration Example of Information Processing Device 100)

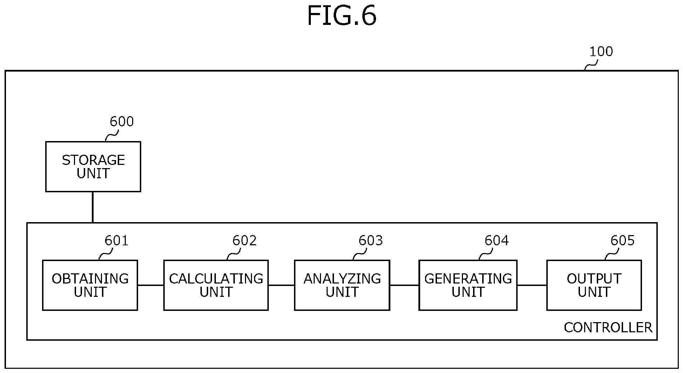

Next, an example of a functional configuration of the information processing device 100 will be described with reference to Fig. 6. Specifically, an example of the functional configuration of the information processing device 100 implements the use status analysis function 401 and the usage state display function 402 in the functional configuration example of the job managing system 200 depicted in Fig. 4.

Fig. 6 is a block diagram depicting an example of a functional configuration of the information processing device 100. The information processing device 100 includes a storage unit 600, an obtaining unit 601, a calculating unit 602, an analyzing unit 603, a generating unit 604, and an output unit 605.

The storage unit 600 is realized by, for example, a storage area such as the memory 302 or the recording medium 305 depicted in Fig. 3. Hereinafter, while a case where the storage unit 600 is included in the information processing device 100 will be described, the present invention is not limited hereto. For example, the storage unit 600 may be included in a device different from the information processing device 100, and the storage content of the storage unit 600 may be referable by the information processing device 100.

The obtaining unit 601 to the output unit 605 function as an example of a controller. Specifically, the functions of the obtaining unit 601 to the output unit 605 are implemented, for example, by causing the CPU 301 to execute a program stored in a storage area such as the memory 302 or the recording medium 305 depicted in Fig. 3 or by the network I/F 303. The process results of each functional unit is stored to, for example, a storage area such as the memory 302 or the recording medium 305 depicted in Fig. 3.

The storage unit 600 stores various types of information referred to or updated in the processes by the functional units. The storage unit 600 stores, for example, record information. The record information indicates, for a job, the number of nodes that execute the job, a time point at which the job is input, and a time point at which execution of the job is started. The record information may further represent, for each of the jobs, a user corresponding to the job. Specifically, the storage unit 600 stores record information for each of the jobs submitted to the system having multiple nodes. More specifically, the storage unit 600 stores the log information management table depicted in Fig. 5. The record information is obtained by the obtaining unit 601, for example.

The obtaining unit 601 obtains various types of information used in the processes by the functional units. The obtaining unit 601 stores the obtained various types of information to the storage unit 600 or outputs the obtained various types of information to each functional unit. The obtaining unit 601 may output various types of information stored in the storage unit 600 to each functional unit. The obtaining unit 601 obtains various types of information based on, for example, an operation input of an administrator. For example, the obtaining unit 601 may receive various types of information from a device different from the information processing device 100.

The obtaining unit 601 obtains, for example, record information. Specifically, the obtaining unit 601 obtains record information for each of multiple jobs submitted to a system including multiple nodes. More specifically, the obtaining unit 601 receives record information from another computer for each of the multiple jobs submitted to the system having multiple nodes. The other computer is, for example, the management device 201. More specifically, the obtaining unit 601 may obtain the record information by receiving an input of the record information for each of the multiple jobs submitted to the system including multiple nodes, based on an operation input of an administrator.

The obtaining unit 601 may receive a start trigger for starting the process of any functional unit. The start trigger is, for example, a predetermined operation input by the administrator. The start trigger may be, for example, reception of predetermined information from another computer. The start trigger may be, for example, output of predetermined information by any functional unit. For example, the obtaining unit 601 regards obtaining the record information as a start trigger for starting the processes of the calculating unit 602, the analyzing unit 603, and the generating unit 604.

The calculating unit 602 calculates the length of the period during which each of the multiple jobs is under execution, based on the record information obtained by the obtaining unit 601. For example, the calculating unit 602 calculates, for each of the multiple jobs, a length of a period from the time point at which execution of the job is started to the time point at which execution of the job is ended as the length of the execution period during which the job is being executed. Thus, the calculating unit 602 can obtain a guideline for analyzing the job execution tendency by the analyzing unit 603.

The calculating unit 602 calculates the length of the execution waiting period of each of the multiple jobs, based on the record information obtained by the obtaining unit 601. For example, the calculating unit 602 calculates, for each of the multiple jobs, a length of a period from the time point at which the job is input to the time point at which execution of the job is started, as the length of the execution waiting period of the job. Thus, the calculating unit 602 can obtain a guideline for analyzing the job execution tendency by the analyzing unit 603.

The calculating unit 602 calculates, for each user, a statistical value for the length of the period during which a job corresponding to the user is being executed, based on the record information obtained by the obtaining unit 601. The statistical value is, for example, an average value, a maximum value, a minimum value, a mode value, or a median value. Thus, the calculating unit 602 can obtain a guideline for analyzing the job execution tendency by the analyzing unit 603.

The calculating unit 602 calculates, for each user, a statistical value for the length of the execution waiting period of a job corresponding to the user, based on the record information obtained by the obtaining unit 601. The statistical value is, for example, an average value, a maximum value, a minimum value, a mode value, or a median value. Thus, the calculating unit 602 can obtain a guideline for analyzing the job execution tendency by the analyzing unit 603.

The calculating unit 602 calculates, for each user, a statistical value for the number of nodes that execute jobs corresponding to the user, based on the record information obtained by the obtaining unit 601. The statistical value is, for example, an average value, a maximum value, a minimum value, a mode value, or a median value. Thus, the calculating unit 602 can obtain a guideline for analyzing the job execution tendency by the analyzing unit 603.

Based on the length of the execution waiting period calculated for each job by the calculating unit 602, the analyzing unit 603 identifies one or more jobs for which the execution waiting period exceeds a predetermined length among the multiple jobs. The predetermined length may be, for example, 0. As a result, the analyzing unit 603 can obtain a guideline for generating output information by the generating unit 604 to make it possible to grasp the cause of the occurrence of the execution waiting for the job.

The analyzing unit 603 identifies the job having the longest execution period among the multiple jobs, based on the length of the execution period calculated for each job by the calculating unit 602. As a result, the analyzing unit 603 can obtain a guideline for generating job information by the generating unit 604 in order to make it possible to grasp the cause of occurrence of the execution waiting for the job.

The analyzing unit 603 identifies the job having the longest execution waiting period among the multiple jobs, based on the length of the execution waiting period calculated for each job by the calculating unit 602. As a result, the analyzing unit 603 can obtain a guideline for generating job information by the generating unit 604 in order to make it possible to grasp the cause of occurrence of the execution waiting in the job.

Based on the record information obtained by the obtaining unit 601, the analyzing unit 603 identifies a job having the largest number of nodes to be executed among the multiple jobs. As a result, the analyzing unit 603 can obtain a guideline for generating job information by the generating unit 604 in order to make it possible to grasp the cause of occurrence of the execution waiting in the job.

The analyzing unit 603 identifies the user having the largest statistical value for the length of the period during which the job is being executed, based on the statistical value for the length of the period during which the job corresponding to the user is being executed, which is calculated for each user by the calculating unit 602. As a result, the analyzing unit 603 can obtain a guideline for the generating unit 604 to generate the user information in order to make it possible to grasp a factor that causes the job to wait for execution.

The analyzing unit 603 identifies the user having the largest statistical value for the length of the execution waiting period of a job, based on the statistical value for the length of the execution waiting period of a job corresponding to the user, calculated for each user by the calculating unit 602. As a result, the analyzing unit 603 can obtain a guideline for the generating unit 604 to generate the user information in order to make it possible to grasp a factor that causes the job to wait for execution.

The analyzing unit 603 identifies the user having the largest statistical value for the number of nodes, based on the statistical value for the number of nodes that execute a job corresponding to the user, calculated for each user by the calculating unit 602. As a result, the analyzing unit 603 can obtain a guideline for the generating unit 604 to generate the user information in order to make it possible to grasp a factor that causes the job to wait for execution.

The generating unit 604 generates output information. The output information visualizes at least, for each of the one or more jobs identified by the identifying unit, the number of nodes that execute the job and the execution waiting period of the job. The output information is, for example, screen information indicating a display screen in a Gantt chart format.

The display screen includes, for example, M band-shaped execution waiting job display areas arranged in parallel along the time axis. On the display screen, for example, for each of the one or more jobs identified by the identifying unit, a frame representing the execution waiting period during which the job is waiting to be executed is arranged in the job awaiting execution display area corresponding to the number of nodes that execute the job.

The frame representing the period during which the job is waiting for execution may indicate the job in an identifiable manner, for example. Specifically, the frame representing the period during which the job is waiting to be executed may be indicated by a pattern corresponding to the job. The frame representing the period during which the job is waiting for execution may indicate in an identifiable manner, for example, the user who has input the job. Specifically, a user ID for identifying the user who has input the job may be assigned to the frame representing the period during which the job is waiting to be executed.

The display screen may further include, for example, N job-under-execution display areas having a band-shape and arranged in parallel along the time axis. On the display screen, for example, for each of the multiple jobs, a frame representing a period during which the job is being executed is arranged in the job-under-execution display areas corresponding to the number of nodes that execute the job.

The N job-under-execution display areas may be associated with different nodes. On the display screen, for example, for each of the multiple jobs, a frame representing a period during which the job is being executed may be arranged in a job-under-execution display area corresponding to a node that executes the job.

The frame representing the period during which the job is being executed may indicate the job in an identifiable manner, for example. Specifically, the frame representing the period during which the job is being executed may be indicated by a pattern corresponding to the job. The frame representing the period during which the job is being executed may indicate in an identifiable manner, for example, the user who input the job. Specifically, a user ID for identifying the user who input the job may be assigned to the frame representing the period during which the job is being executed.

For example, when a first job corresponding to a first user among the multiple jobs is being executed and a second job corresponding to the first user among one or more jobs is waiting to be executed, a frame representing an execution waiting period during which the second job is waiting to be executed may be displayed in a specific display mode on the display screen. The specific display mode is, for example, that the frame formed by thick lines.

For example, when two jobs corresponding to the same user among the one or more jobs identified by the identifying unit are concurrently waiting to be executed, a frame representing a period during which at least one of the two jobs is waiting to be executed may be displayed in a specific display mode on the display screen. The specific display mode is, for example, that the frame is formed by thick lines. As a result, the generating unit 604 can obtain the output information serving as a guideline for grasping the cause of occurrence of the execution waiting in the job.

The generating unit 604 generates job information indicating among the multiple jobs, the job having the longest execution period identified by the identifying unit. As a result, the generating unit 604 can obtain the job information serving as a guideline for grasping the cause of the occurrence of the execution waiting in the job.

The generating unit 604 generates job information indicating among the plurality of jobs, the job having the longest execution waiting period identified by the identifying unit. As a result, the generating unit 604 can obtain the job information serving as a guideline for grasping the cause of the occurrence of the execution waiting in the job.

The generating unit 604 generates job information indicating the job that among the multiple jobs, is identified by the identification unit and has the largest number of nodes to be executed. As a result, the generating unit 604 can obtain the job information serving as a guideline for grasping the cause of the occurrence of the execution wait for the job.

The generating unit 604 generates user information indicating the user who has the largest statistical value for the length of the period during which the job is being executed, which is identified by the identification unit. As a result, the generating unit 604 can obtain the user information serving as a guideline for grasping the cause of occurrence of the execution wait for the job.

The generating unit 604 generates user information indicating the user who has the largest statistical value for the length of the execution waiting period of the jobs identified by the identification unit. As a result, the generating unit 604 can obtain the user information serving as a guideline for grasping the cause of occurrence of the execution wait for a job.

The generating unit 604 generates user information indicating the user having the largest statistical value for the number of nodes identified by the identification unit. As a result, the generating unit 604 can obtain the user information serving as a guideline for grasping the cause of occurrence of the execution wait for the job.

The output unit 605 outputs a process result of at least one of the functional units. The output format is, for example, display on a display, print output to a printer, transmission to an external device by the network I/F 303, or storage in a storage area such as the memory 302 or the recording medium 305. Accordingly, the output unit 605 can notify the administrator of the process result of at least one of the functional units, and the convenience of the information processing device 100 can be improved.

The output unit 605 outputs the output information generated by the generating unit 604. The output unit 605 displays a display screen based on the output information generated by the generating unit 604, for example. As a result, the output unit 605 enables the administrator to refer to the output information serving as a guideline for grasping the cause of the occurrence of the execution wait for the job. The output unit 605 can make it easy for the administrator to grasp the cause of the occurrence of the execution wait for the job.

When displaying the display screen, the output unit 605 may receive selection of a frame representing a period during which any one of the multiple jobs is being executed or is waiting to be executed. The output unit 605 may redisplay the display screen so that a frame representing a period during which another job corresponding to the same user as that of one of the jobs corresponding to the frame whose selection has been received is being executed or is waiting to be executed, is displayed in a specific display mode. As a result, the output unit 605 can make it easy for the administrator to grasp the cause of the occurrence of the execution waiting of the job.

For example, the output unit 605 may transmit the output information generated by the generating unit 604 to another computer. As a result, the output unit 605 can externally refer to the output information serving as a guideline for grasping the cause of the occurrence of the execution waiting of the job. The output unit 605 can make it easy for the administrator to grasp the cause of the occurrence of the execution waiting of the job.

### (Operation Example of Information Processing Device 100)

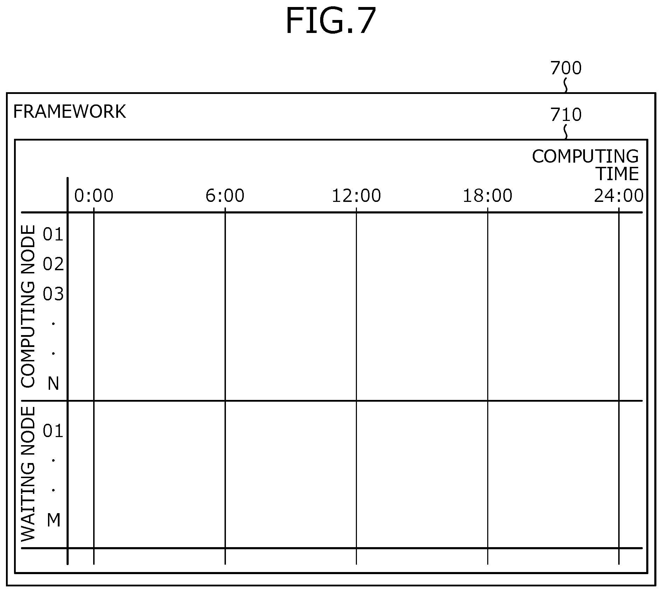

Next, an operation example of the information processing device 100 will be described with reference to Figs. 7 to 10.

Figs. 7, 8, 9, and 10 are explanatory diagrams depicting operation examples of the information processing device 100. In Fig. 7, it is assumed that multiple jobs are input to the job executing system 220. The information processing device 100 obtains the storage contents of the log management table depicted in Fig. 5. In the following description, a combination of values of the fields of the job ID, the user ID, and the used node Nos. among the storage contents of the log management table may be referred to as "job data ".

The information processing device 100 obtains the number N of computing nodes 202. The information processing device 100 receives the display start time Ts and the display end time Te, based on the operation input of the administrator. The information processing device 100 identifies the maximum value M in the set of the total values of the numbers of the computing nodes 202 used by the jobs waiting to be executed at each time, based on the storage content of the log management table. Specifically, M is the maximum value in the set of the total values of the number of computing nodes 202 used by a job waiting for execution in which the length of the waiting period for execution exceeds the threshold at each time.

The information processing device 100 generates the visualization framework 700 based on the display start time Ts, the display end time Te, and the maximum value M of the total value of the number of computing nodes 202 used by jobs waiting to be executed at the same time. The visualization framework 700 depicts a Gantt chart 710. The Gantt chart 710 includes a time axis corresponding to a combination of the display start time Ts and the display end time Te. The Gantt chart 710 includes N band-shaped display regions arranged in parallel along the time axis and corresponding to different computing nodes 202. For example, the display area corresponding to the computing node 202 is displayed in association with the computing node 202 "No." that identifies the computing node 202. The computing node 202 "No." is 1, ..., N. In the display area corresponding to the computing node 202, for example, a frame representing a period during which a job is being executed by the computing node 202 can be arranged.

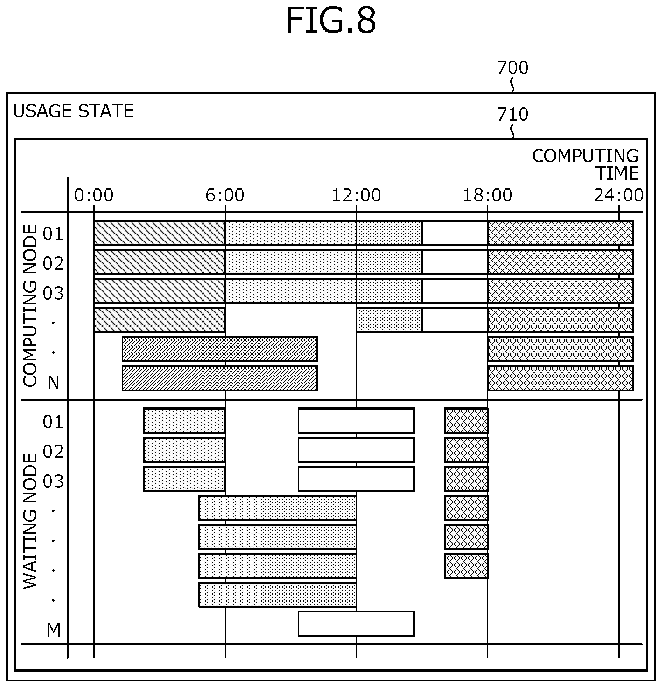

The Gantt chart 710 further includes M band-shaped display regions arranged in parallel along the time axis and corresponding to different waiting nodes. The M band-shaped display regions are arranged in parallel with the N band-shaped display regions. The waiting node is a virtual node. The waiting node is set so that the administrator can intuitively grasp the number of computing nodes 202 to be used by the job waiting for execution. For example, a job waiting to be executed is regarded as waiting to be executed in a waiting node until the job is executed in the computing node 202. The display area corresponding to the waiting node is displayed in association with, for example, a waiting node number for identifying the waiting node. The waiting node numbers are 1, ..., M. In the display area corresponding to the waiting node, for example, a frame representing an execution waiting period of a job in the waiting node can be arranged. Next, Fig. 8 will be described.

In Fig. 8, the information processing device 100 identifies the computing nodes 202 that have executed each of the multiple jobs input to the job executing system 220, based on the use node Nos. among the storage contents of the log management table. The information processing device 100 identifies an execution period for each of the multiple jobs, based on values of the fields of the job start time and the job end time among the storage contents of the log management table.

In the Gantt chart 710, the information processing device 100 displays, for each of the multiple jobs, a frame representing the execution period thereof along the time axis in one or more display areas in which the used node Nos.= the computing node 202 "Nos." among the N display areas. At this time, the information processing device 100 may display a frame representing the execution period with a color or a pattern corresponding to the job.

The information processing device 100 identifies an execution waiting period for each of the multiple jobs, based on the values of the fields of the job submission time and the job start time among the storage contents of the log management table, and calculates the length of the execution waiting period. The information processing device 100 identifies, among the multiple jobs, each job awaiting execution and for which the calculated length of the waiting period exceeds a threshold. The threshold is, for example, one minute.

In the Gantt chart 710, among the M display areas, the information processing device 100 identifies, for each of the identified jobs awaiting execution, the same number of display areas as the number of the computing nodes 202 that execute the job awaiting execution. In the Gantt chart 710, the information processing device 100 displays, for each of the identified jobs awaiting execution, a frame representing the execution waiting period, in the identified display area along the time axis.

For example, in the Gantt chart 710, the information processing device 100 selects, for each of the identified jobs waiting to be executed, one or more waiting node Nos. that are equal in number to the computing nodes 202 that execute the job waiting to be executed. For example, in the Gantt chart 710, the information processing device 100 displays, for each of the identified jobs waiting to be executed, a frame representing the period during which the job waiting to be executed waits to be executed, the frame being displayed along the time axis, in the display region of the selected waiting node No., among the M display regions. At this time, the information processing device 100 may display for the identified jobs awaiting execution, a frame representing the execution period thereof in a color or a pattern corresponding to the job awaiting execution.

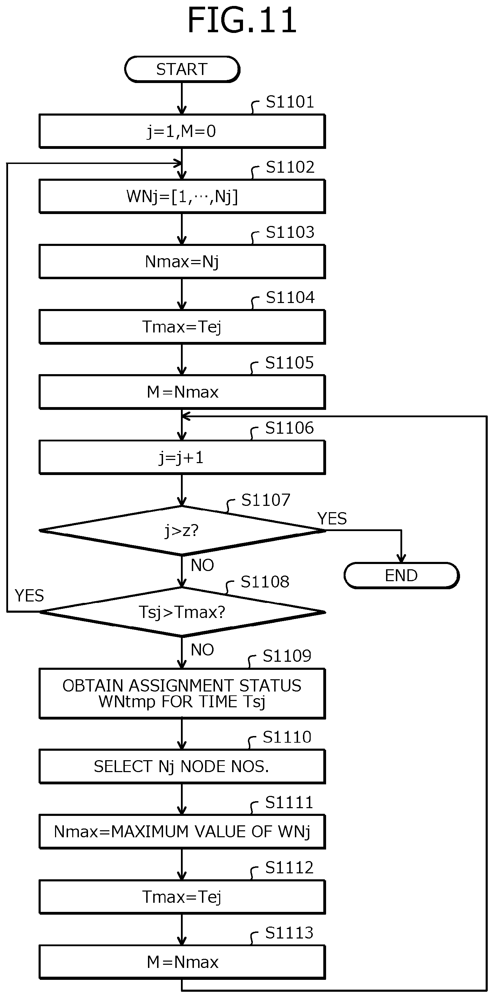

Here, it is preferable that the information processing device 100 displays, for example, a frame representing a period during which a job is waiting to be executed so as not to overlap another frame. Here, for convenience, while a case where the information processing device 100 selects the waiting node No. after specifying M has been described, the present invention is not limited hereto. For example, the information processing device 100 may specify M while selecting the waiting node No. Specifically, it is conceivable that the information processing device 100 specifies M while selecting a waiting node No. by executing a calculating process described later with reference to Fig. 11.

For example, the information processing device 100 displays the Gantt chart 710 so that the administrator can refer to the Gantt chart 710. As a result, the information processing device 100 enables the administrator to refer to the Gantt chart 710 serving as a guideline for analyzing a factor that a job is waiting to be executed in the job executing system 220. Therefore, the information processing device 100 enables the administrator to easily grasp a factor that causes the length of the execution waiting period of a job in the job executing system 220 to exceed the threshold.

The information processing device 100 enables, for example, an administrator or the like to grasp a relationship between execution statuses of jobs waiting for execution for which the length of the execution waiting period exceeds a threshold. Further, for example, the information processing device 100 enables the administrator to grasp the bias of a time slot in which a job waiting for execution and for which the length of the execution waiting period exceeds the threshold uses a node. Specifically, the information processing device 100 enables the administrator to analyze in which time slot the length of the execution waiting period of a job tends to exceed the threshold.

Therefore, the information processing device 100 allows the administrator to easily determine a measure for reducing the frequency of occurrence of a job awaiting execution for which the length of the execution waiting period exceeds the threshold value, a measure for reducing the length of the execution waiting period of the job, or the like. Therefore, the information processing device 100 can improve the user's satisfaction or reliability with respect to the job executing system 220. The information processing device 100 can distribute the load of the job executing system 220.

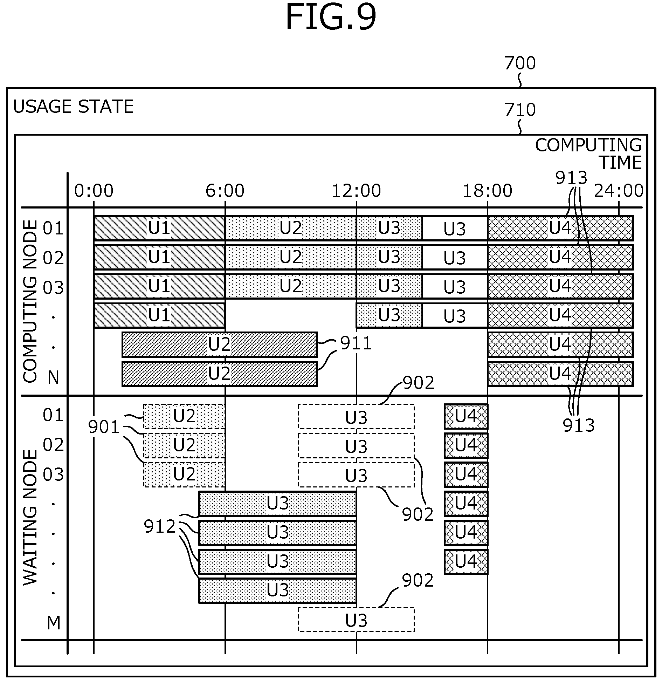

Next, with reference to Fig. 9, another example in which the information processing device 100 displays the Gantt chart 710 will be described. Here, the information processing device 100 displays a frame representing an execution period for each of the multiple jobs in the Gantt chart 710 as depicted in Fig. 8. At this time, the information processing device 100 assigns the user ID of the user who has input the job to the frame representing the execution period of the job and displays the frame.

As depicted in Fig. 8, the information processing device 100 displays, in the Gantt chart 710, a frame representing the execution waiting period of each of the jobs awaiting execution and for which the length of the execution waiting period exceeds the threshold. At this time, it is assumed that the information processing device 100 assigns the user ID of the user who has input the job to a frame representing an execution waiting period during which the job is waiting to be executed and displays the frame.

In Fig. 9, the information processing device 100 further identifies for each job awaiting execution and for which the length of the execution waiting period exceeds the threshold value, another job under execution in the execution waiting period of the job awaiting execution. The information processing device 100 determines whether there is another job input by the same user as that of a job awaiting execution among the other jobs identified for each of the jobs awaiting execution and for which the length of the execution waiting period exceeds the threshold value.

In a case where the information processing device 100 determines that there is another job with respect to any of the jobs awaiting execution and for which the length of the execution waiting period exceeds the threshold value, the information processing device 100 changes the display mode of the frame representing the execution waiting period of the job awaiting execution. For example, in a case where the information processing device 100 determines that there is another job with respect to any of the jobs awaiting execution and for which the length of the waiting period exceeds the threshold value, the information processing device 100 changes the display mode of the frame representing the waiting period of the job waiting such that the color or the pattern of the frame is lightened. In the example depicted in Fig. 9, the information processing device 100 changes the display mode of the frame 901 so that the pattern of the frame 901 representing the execution waiting period of the job awaiting execution input by the user U2 and for which the length of the execution waiting period exceeds the threshold value is thinner and the frame 901 is indicated by a dotted line.

The information processing device 100 further determines whether a combination of jobs awaiting execution and whose execution waiting periods overlap and whose lengths of the execution waiting periods exceed a threshold is a combination of jobs input by the same user. The information processing device 100 changes the display mode of the frame representing the execution waiting period of at least one job among the combinations of the jobs awaiting execution determined as combinations of jobs input by the same user and for which the lengths of the execution waiting periods exceed the threshold. For example, the information processing device 100 changes the display mode of the frame so that the color or the pattern of the frame representing the execution waiting period of the job is lightened. In the example depicted in Fig. 9, the information processing device 100 changes the display mode of the frame 902 so that the frame 902 representing the execution waiting period of the job awaiting execution input by the user U3 and for which the length of the execution waiting period exceeds the threshold is displayed with a dotted line.

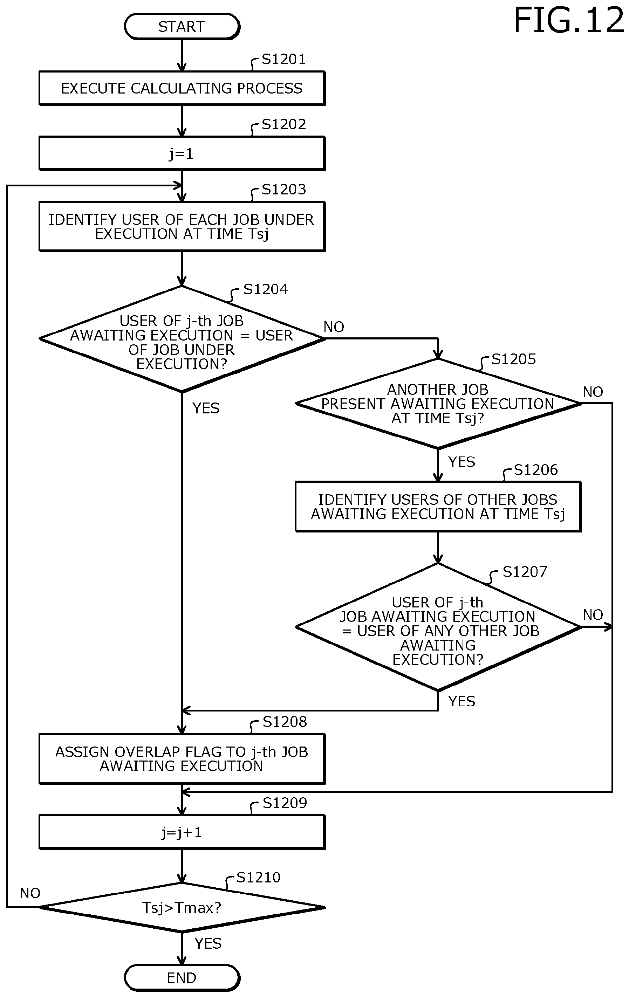

Specifically, the information processing device 100 changes the display mode of the frame representing the execution waiting period of the job awaiting execution by executing a determining process described later with reference to Fig. 12. As a result, the information processing device 100 allows the administrator to easily pay attention to a job waiting for execution and for which the length of the execution waiting period exceeds the threshold, other than a job that is awaiting execution, is input by the same user as that of the job being executed, and for which the length of the execution waiting period exceeds the threshold. The information processing device 100 enables the administrator to easily analyze which user has a tendency to input a job that waits for execution and for which the length of the execution waiting period exceeds the threshold.

In addition, the information processing device 100 may change the background of each display region for each time slot in the Gantt chart 710. For example, in the Gantt chart 710, the information processing device 100 may change the background between a partial region corresponding to a daytime time slot and a partial region corresponding to a nighttime time slot among the respective display regions. For example, in the Gantt chart 710, the information processing device 100 may change the background between a partial region corresponding to a weekday time slot and a partial region corresponding to a holiday time slot among the respective display regions. As a result, the information processing device 100 enables the administrator to easily grasp the status of a job being executed or waiting to be executed.

In addition, the information processing device 100 may receive selection of a frame representing a period during which any job is being executed or is waiting to be executed, in the Gantt chart 710. The information processing device 100 may highlight a frame representing a period during which another job input by the same user as that of the job corresponding to the frame for which the selection is received is being executed or is waiting to be executed. As a result, the information processing device 100 enables the administrator to easily grasp the status of a job being executed or waiting to be executed.

The information processing device 100 may display combinations of a predetermined number of jobs and users who input the jobs in descending order of the execution period. The predetermined number is, for example, 1. In the example depicted in Fig. 9, the information processing device 100 may display a combination of the job corresponding to the frame 911 and the user U2. As a result, the information processing device 100 enables the administrator to easily grasp the status of a job being executed or waiting to be executed.

The information processing device 100 may display in descending order of the execution waiting period, combinations of a predetermined number of jobs and users who input the jobs. The predetermined number is, for example, 1. In the example depicted in Fig. 9, the information processing device 100 may display a combination of the job corresponding to the frame 912 and the user U3. As a result, the information processing device 100 enables the administrator to easily grasp the status of a job being executed or waiting to be executed.

The information processing device 100 may display in descending order of the number of nodes to be used, combinations of a predetermined number of jobs and users who input the jobs. The predetermined number is, for example, 1. In the example depicted in Fig. 9, the information processing device 100 may display a combination of the job corresponding to the frame 913 and the user U4. As a result, the information processing device 100 enables the administrator to easily grasp the status of a job being executed or waiting to be executed.

The information processing device 100 may calculate, for each user, a statistical value for the length of an execution period during which a job submitted by the user is under execution, and may display the user having the largest statistical value. The statistical value is, for example, an average value or a total value. In the example depicted in Fig. 9, the information processing device 100 may display the user U2 or the user U4. As a result, the information processing device 100 enables the administrator to easily grasp the status of a job being executed or waiting to be executed.

The information processing device 100 may calculate, for each user, a statistical value for the length of the execution waiting period of the job input by the user and display the user having the largest statistical value. The statistical value is, for example, an average value or a total value. In the example depicted in Fig. 9, the information processing device 100 may display a user U3. As a result, the information processing device 100 enables the administrator to easily grasp the status of a job being executed or waiting to be executed.

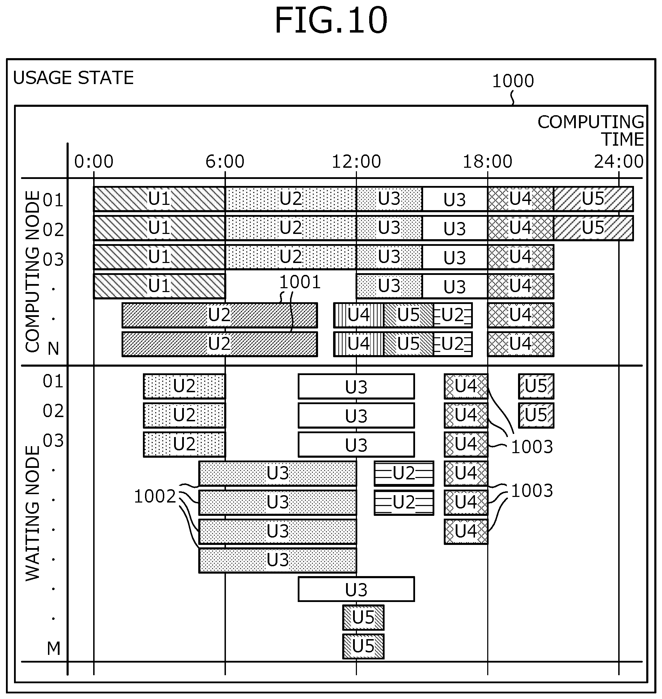

The information processing device 100 may calculate, for each user, a statistical value for the number of nodes used by jobs submitted by the user and display the user having the largest statistical value. The statistical value is, for example, an average value or a maximum value. In the example depicted in Fig. 9, the information processing device 100 may display a user U4. As a result, the information processing device 100 enables the administrator to easily grasp the status of a job being executed or waiting to be executed. When the information processing device 100 suppresses the frequency at which the user U4 inputs the job, the administrator can easily grasp that the job executing system 220 can efficiently execute the job. Next, an example of an effect of the information processing device 100 will be described with reference to Fig. 10.

Fig. 10 depicts an example of an effect of the information processing device 100. In the example depicted in Fig. 10, it is assumed that the information processing device 100 displays a Gantt chart 1000. As a result, the information processing device 100 can visualize the status of a job being executed or waiting to be executed, and the administrator can easily grasp the factor of the job waiting to be executed.

For example, by referring to the Gantt chart 1000, the administrator can grasp the variation in the length of the execution waiting period for each time slot. For example, when the administrator determines that the variation in the length of the execution waiting period is relatively large depending on the time slot, the administrator can determine a policy for guiding the user so as to equalize the length of the execution waiting period. Specifically, when the administrator determines that the variation in the length of the execution waiting period is relatively large for each user, the administrator guides a user who tends to have a long execution waiting period to submit a job in a time slot in which the execution waiting period tends to be relatively short.

In the example depicted in Fig. 10, the administrator determines that, for example, there are a relatively large number of jobs to be input in the daytime and the execution waiting period is likely to be long. Further, for example, the administrator determines that the number of jobs to be input is relatively small in the nighttime slot and the execution waiting period is unlikely to be long.

Therefore, for example, the administrator guides a user who is likely to have a relatively large statistical value for the length of the execution period for a job to submit the job during the nighttime slot. For example, the administrator guides a user having a relatively large statistical value for the length of the execution waiting period to submit a job in a subsequent nighttime slot. For example, the administrator guides a user having a relatively large statistical value for the number of nodes used by the submitted job to submit the job in a subsequent nighttime slot. For example, the administrator may also notify a user having a relatively small statistical value for the number of nodes used by the submitted job of a time slot in which the execution waiting period of the job tends to be relatively short.

As a result, the administrator can grasp the factor by which the length of the execution waiting period of a job exceeds the threshold value in the job executing system 220, and can reduce the length of the execution waiting period of the job. The administrator can improve the user's satisfaction with or the reliability of the job executing system 220. The administrator can distribute the load of the job executing system 220.

The information processing device 100 may output the Gantt chart 1000 so that the user can refer to the Gantt chart 1000. As a result, the information processing device 100 allows the user to easily adjust the timing at which a job is input. The information processing device 100 enables the user to easily distribute the load of the job executing system 220.

### (Procedure of calculating Process)

Next, an example of a procedure of the calculating process executed by the information processing device 100 will be described with reference to Fig. 11. The calculating process is implemented by, for example, the CPU 301, the storage area such as the memory 302 or the recording medium 305, and the network I/F 303 depicted in Fig. 3.

Fig. 11 is a flowchart depicting an example of a procedure of the calculating process. In Fig. 11, it is assumed that the information processing device 100 extracts based on the storage content of the log information management table, the job data j (j=1, ..., z) of a job for which the length of the execution waiting period exceeds the threshold value, which is sorted in the order of the job submission time. The job submission time of the job data j is Tsj. The job start time of the job data j is Tej. The number of used nodes of the job data j is Nj. The information processing device 100 sets j=1 and M=0 (step S1101).

The information processing device 100 sets a list WNj=[1, ..., Nj] of waiting node Nos. corresponding to the job data j (step S1102). The information processing device 100 sets Nmax=Nj (step S1103). The information processing device 100 sets Tmax=Tej (step S1104). When Nmax>M is true, the information processing device 100 sets M=Nmax (step S1105).

The information processing device 100 sets j=j+1 (step S1106). The information processing device 100 determines whether j>z is satisfied (step S1107). Here, when j>z is satisfied (step S1107: YES), the information processing device 100 ends the calculating process. On the other hand, when not j>z but j≤z is satisfied (step S1107: NO), the information processing device 100 proceeds to the process at step S1108.

At step S1108, the information processing device 100 determines whether Tsj>Tmax is satisfied (step S1108). Here, when Tsj>Tmax is satisfied (step S1108: YES), the information processing device 100 returns to the process at step S1102. On the other hand, when not Tsj>Tmax but Tsj≤Tmax is satisfied (step S1108: NO), the information processing device 100 proceeds to the process at step S1109.

At step S1109, the information processing device 100 obtains an assignment status WNtmp at the time Tsj (step S1109). The assignment status WNtmp represents a set of waiting node Nos. allocated to the list of waiting node Nos. corresponding to job data k of a job in which the length of the execution waiting period at the time Tsj exceeds a threshold.

The information processing device 100 selects Nj standby node Nos. that are not in the assignment status WNtmp and sets the standby node Nos. to WNj in ascending order (step S1110). The information processing device 100 sets the maximum value of Nmax=WNj (step S1111). When Tmax>Tej is true, the information processing device 100 sets Tmax=Tej (step S1112). When Nmax>M is true, the information processing device 100 sets M=Nmax (step S1113). Then, the information processing device 100 returns to the process at step S1106.

### (Procedure of Determining Process)

Next, an example of a procedure of a determining process executed by the information processing device 100 will be described with reference to Fig. 12. The determining process CPU301 is implemented by, for example, the CPU 301, the storage area such as the memory 302 or the recording medium 305, and the network I/F 303 depicted in Fig. 3.

Fig. 12 is a flowchart depicting an example of the procedure of the determining process. In Fig. 12, the information processing device 100 executes the calculating process (step S1201). The information processing device 100 sets j=1 (step S1202).

The information processing device 100 identifies the user of each job being executed at time Tsj (step S1203). The information processing device 100 determines whether the user of the j-th job waiting to be executed at time Tsj is the user of a job under execution (step S1204). Here, when the user of the j-th job waiting to be executed is the user of a job under execution (step S1204: YES), the information processing device 100 proceeds to the process at step S1208. On the other hand, when the user of the j-th job waiting to be executed is not the user of a job under execution (step S1204: NO), the information processing device 100 proceeds to the process at step S1205.

At step S1205, the information processing device 100 determines whether there is another job waiting for execution at time Tsj other than the j-th job waiting for execution (step S1205). Here, when there is no other job waiting for execution (step S1205: NO), the information processing device 100 proceeds to the process at step S1209. On the other hand, when there is another job waiting for execution (step S1205: YES), the information processing device 100 proceeds to the process at step S1206.

At step S1206, the information processing device 100 identifies users of other jobs waiting for execution at time Tsj (step S1206). The information processing device 100 determines whether the user of the j-th job waiting to be executed at time Tsj is the user of any other job waiting to be executed (step S1207). Here, when the user of the j-th job waiting to be executed is not the user of any other job waiting to be executed (step S1207: NO), the information processing device 100 proceeds to the process at step S1209. On the other hand, when the user of the j-th job waiting to be executed = the user of any other job waiting to be executed (step S1207: YES), the information processing device 100 proceeds to the process at step S1208.

At step S1208, the information processing device 100 assigns an overlap flag to the j-th job waiting for execution (step S1208). Then, the information processing device 100 proceeds to the process at step S1209.

At step S1209, the information processing device 100 sets j=j+1 (step S1209). The information processing device 100 determines whether Tsj>Tmax is satisfied (step S1210). Here, when Tsj≤Tmax instead of Tsj>Tmax is true (step S1210: NO), the information processing device 100 returns to the process at step S1203. On the other hand, when Tsj>Tmax is true (step S1210: YES), the information processing device 100 ends the determining process.

### (Procedure of Overall Process)

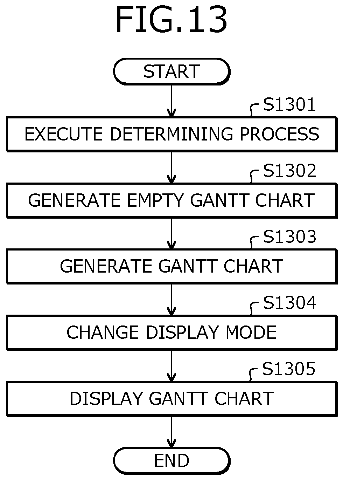

Next, an example of a procedure of an overall process executed by the information processing device 100 will be described with reference to Fig. 13. The overall process is implemented by, for example, the CPU 301, storage areas such as the memory 302 and the recording medium 305, and the network I/F 303 depicted in Fig. 3.

Fig. 13 is a flowchart depicting an example of the procedure of the overall process. In Fig. 13, the information processing device 100 executes the determining process depicted in Fig. 12 (step S1301). The information processing device 100 generates an empty Gantt chart based on WNj determined in the calculating process depicted in Fig. 11 (step S1302).

The information processing device generates, based on the empty Gantt chart, a Gantt chart in which a frame representing a period during which a job is under execution and a frame representing an execution waiting period during which a job is awaiting execution for a length of time that exceeds a threshold are arranged (step S1303). Based on the overlap flag assigned in the determining process depicted in Fig. 12, the information processing device changes the display mode of the frame representing the execution waiting period of the job for which the overlap flag is assigned in the Gantt chart (step S1304). The information processing device displays the Gantt chart (step S1305). The information processing device ends the entire processing.

As described above, according to the information processing device 100, it is possible to identify based on record information, one or more jobs for which the execution waiting period exceeds a predetermined length among multiple jobs. According to the information processing device 100, for each of the identified one or more jobs, it is possible to generate output information that visualizes the number of nodes that execute the job and the execution waiting period during which the job waits to be executed. As a result, the information processing device 100 can prepare output information useful for the administrator to grasp the cause of the wait for the execution of a job.

According to the information processing device 100, it is possible to generate output information as a display screen in a Gantt chart format including multiple band-shaped first display regions arranged in parallel along the time axis. According to the information processing device 100, in the display screen, for each of the identified one or more jobs, a frame representing the execution waiting period of a job can be arranged in the same number of first display regions as the number of nodes executing the job among the first display regions. As a result, the information processing device 100 can prepare output information indicating a display screen that allows the administrator to intuitively understand the cause of the wait for the execution of a job.

According to the information processing device 100, it is possible to generate output information indicating a display screen in a Gantt chart format including multiple band-shaped first display regions and multiple band-shaped second display regions arranged in parallel along the time axis. According to the information processing device 100, for each of the multiple jobs in the display screen, a frame representing an execution period during which the job is being executed can be arranged in the second display area corresponding to the node that has executed the job, among the second display areas. As a result, the information processing device 100 can prepare output information indicating a display screen that allows the administrator to intuitively understand the cause of the wait for the execution of a job.

When among one or more jobs, a second job corresponding to the first user is waiting to be executed while a first job corresponding to the first user is being executed, the information processing device 100 can display in a specific display mode in the display screen, a frame representing an execution waiting period during which the second job waits to be executed. As a result, the information processing device 100 can change the display mode so that the administrator can easily and intuitively grasp the cause of the wait for the execution of a job.

According to the information processing device 100, in a case where among the identified one or more jobs, two jobs corresponding to the same user are waiting for execution at the same time, a frame representing an execution waiting period during which one of the two jobs waits for execution can be displayed in a specific display mode in the display screen. As a result, the information processing device 100 can change the display mode so that the administrator can easily and intuitively grasp the cause of the wait for the execution of a job.

According to the information processing device 100, it is possible to output information indicating the job having the longest execution period, the job having the longest execution waiting period, or the job having the largest number of nodes for execution, among the multiple jobs. As a result, the information processing device 100 can provide the administrator with information that makes it easy to grasp the cause of the wait for the execution of a job.

According to the information processing device 100, it is possible to output the user having the largest statistical value for the length of the execution period during which a job is under execution, based on the statistical values for the lengths of the execution periods of the jobs corresponding to the user, the statistical values being calculated for each user. According to the information processing device 100, it is possible to output the user having the largest statistical value for the length of the execution waiting period of a job, based on the statistical values for the lengths of the execution waiting periods of jobs corresponding to the user, the statistical values being calculated for each user. According to the information processing device 100, it is possible to output the user having the largest statistical value for the number of nodes, based on the statistical values for the number of nodes that execute each job corresponding to the user, the statistical values being calculated for each user. As a result, the information processing device 100 can provide the administrator with information that makes it easy to grasp the cause of the wait for the execution of a job.

According to the information processing device 100, the display screen can be displayed based on the generated output information. As a result, the information processing device 100 allows the administrator to easily and intuitively grasp the cause of the wait for the execution of a job.

According to the information processing device 100, when the display screen is displayed, it is possible to receive selection of a frame representing a period during which any one of the multiple jobs is being executed or is waiting to be executed. According to the information processing device 100, it is possible to redisplay the display screen so that a frame representing the period during which another job corresponding to the same user as that of the jobs under execution or awaiting execution is displayed in a specific display mode in response to the reception of the selection. As a result, the information processing device 100 can provide the administrator with information that makes it easy to grasp the cause of the wait for the execution of a job.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

### EXPLANATIONS OF LETTERS OR NUMERALS

100 Information Processing Device
110 System
111 Node
120 Job
130 Record Information
140 Output Information
141 Display Screen
150 Display Area
200 Job Managing System
201 Managing Device
202 Computing Node
203 Client Device
210 Network
220 Job Executing System
300 Bus
301 CPU
302 Memory
303 Network I/F
304 Recording Medium I/F
305 Recording Medium
401 Usage State Analyzing Function
402 Usage State Displaying Function
600 Storage Unit
601 Obtaining Unit
602 Calculating Unit
603 Analyzing Unit
604 Generating Unit
605 Output Unit
700 Visualization Framework
710, 1000 Gantt Chart
901, 902, 911 To 913 Frame

## Claims

1. An information processing program for causing a computer to execute a process, the process comprising:
identifying, among a plurality of jobs submitted to a system having a plurality of nodes, one or more jobs for which a waiting period during which the one or more jobs awaits execution exceeds a predetermined length, the one or more jobs being identified based on record information that for each of the plurality of jobs, indicates a number of nodes that execute the each of the plurality of jobs, a time point at which the each of the plurality of jobs is submitted, and a time point at which execution of the each of the plurality of jobs is started; and
generating output information that visualizes, for each of the identified one or more jobs, the number of nodes that execute the each of the identified one or more jobs and the waiting period during which the each of the identified one or more jobs awaits execution.

2. The information processing program according to claim 1, wherein
the output information is screen information indicating a display screen in a Gantt chart format that includes a plurality of band-shaped first display areas arranged in parallel along a time axis, and
the generating includes generating the output information so that, in the display screen, for each of the identified one or more jobs, a frame representing the waiting period during which the each of the identified one or more jobs awaits execution is arranged in a same number of first display areas of the plurality of first display areas as the number of nodes that execute the each of the identified one or more jobs.

3. The information processing program according to claim 2, wherein
the output information is screen information indicating a display screen in a Gantt chart format that includes the plurality of band-shaped first display areas and a plurality of band-shaped second display areas arranged in parallel along the time axis, and
the generating includes generating the output information so that, for each of the plurality of jobs, a frame representing an execution period during which the each of the plurality of jobs is under execution is arranged in a second display area that is among the plurality of second display areas in the display screen and that corresponds to a node that executed the each of the plurality of jobs.

4. The information processing program according to claim 3, wherein
the record information further indicates a user corresponding to each of the plurality of jobs, and
the generating includes generating the output information so that when a first job that is among the plurality of jobs and corresponds to a first user is under execution and a second job that is among the identified one or more jobs and corresponds to the first user is awaiting execution, a frame representing a waiting period during which the second job awaits execution is displayed in a specific display mode in the display screen.

5. The information processing program according to claim 4, wherein
the generating includes generating the output information so that when two jobs among the identified one or more jobs correspond to a same user and are concurrently awaiting execution, a frame representing a waiting period during which at least one of the two jobs awaits execution is displayed in the specific display mode in the display screen.

6. The information processing program according to any one of claims 1 to 5, the process further comprising
outputting information indicating among the plurality of jobs, a job for which the execution period is longest, a job for which the waiting period is longest, or a job having a largest number of nodes to be executed.

7. The information processing program according to claim 6, wherein
the outputting includes outputting a user having a statistical value that is largest for any one of: a length of the execution period of a job corresponding the user, a length of the waiting period of the job corresponding the user, and the number of nodes to execute the job corresponding to the user, based on a plurality of statistical values calculated for each user and related to the length of the execution period, the length of the waiting period, and the number of nodes that execute a job corresponding to the each user.

8. The information processing program according to any one of claims 2 to 5, the process further comprising displaying the display screen based on the generated output information.

9. The information processing program according to claim 8, wherein during the displaying, when selection of a first frame representing a first period during which any one of the plurality of jobs is under execution or is awaiting execution is received, in response, the displaying includes re-displaying the display screen so that a second frame representing a second period during which another job corresponding to a same user as that of the any one of the plurality of jobs is under execution or is awaiting execution is displayed in a specific display mode.

10. An information processing method executed by a computer, the method comprising:
identifying, among a plurality of jobs submitted to a system having a plurality of nodes, one or more jobs for which a waiting period during which the one or more jobs awaits execution exceeds a predetermined length, the one or more jobs being identified based on record information that for each of the plurality of jobs, indicates a number of nodes that execute the each of the plurality of jobs, a time point at which the each of the plurality of jobs is submitted, and a time point at which execution of the each of the plurality of jobs is started; and
generating output information that visualizes, for each of the identified one or more jobs, the number of nodes that execute the each of the identified one or more jobs and the waiting period during which the each of the identified one or more jobs awaits execution.

11. An information processing device, comprising a controller configured to:
identify, among a plurality of jobs submitted to a system having a plurality of nodes, one or more jobs for which a waiting period during which the one or more jobs awaits execution exceeds a predetermined length, the one or more jobs being identified based on record information that for each of the plurality of jobs, indicates a number of nodes that execute the each of the plurality of jobs, a time point at which the each of the plurality of jobs is submitted, and a time point at which execution of the each of the plurality of jobs is started; and
generate output information that visualizes, for each of the identified one or more jobs, the number of nodes that execute the each of the identified one or more jobs and the waiting period during which the each of the identified one or more jobs awaits execution.
